Europäisches Patentamt

European Patent Office

Office européen des brevets

(11) Veröffentlichungsnummer: **0 068 233**
**A1**

# (12) EUROPÄISCHE PATENTANMELDUNG

(21) Anmeldenummer: **82105124.0**

(51) Int. Cl.³: **A 22 C 13/00**

(22) Anmeldetag: **11.06.82**

(30) Priorität: **19.06.81 DE 3124143**

(43) Veröffentlichungstag der Anmeldung: **05.01.83**
**Patentblatt 83/1**

(84) Benannte Vertragsstaaten: **AT BE CH FR GB IT LI NL SE**

(71) Anmelder: **Kollross, Günter, Am Wallerstädter Weg 20,
D-6080 Gross Gerau-Dornheim (DE)**

(72) Erfinder: **Kollross, Günter, Am Wallerstädter Weg 20,
D-6080 Gross Gerau-Dornheim (DE)**

(74) Vertreter: **Beyer, Werner, Dipl.-Ing. et al,
Staufenstrasse 36, II P.O. Box 174109,
D-6000 Frankfurt/Main (DE)**

(54) **Axial geraffte und in ein Schlauchnetz eingeschlossene Schlauchhülle.**

(57) Bei einer axial gerafften und in ein aufweitbares Schlauchnetz eingeschlossenen Schlauchhülle, wie sie insbesondere zur späteren Verarbeitung auf einem Wurstfüllautomaten vorgesehen ist, ist das Schlauchnetz (10) aus axialen und in Umfangsrichtung verlaufenden Maschenfäden (14, 16) geknüpft, von denen die in Umfangsrichtung verlaufenden Maschenfäden (16) aus elastisch dehnbarem Material bestehen, während die axial verlaufenden Maschenfäden (14) dehnungssteif sind. Durch diese Ausbildung wird über die bloße Verpackungswirkung des Schlauchnetzes hinaus ein gesteuertes Abziehen des Hüllenmaterials von der Schlauchraupe Falte für Falte bei der Verarbeitung auf dem Wurstfüllautomaten ermöglicht, und das besondere Abbinden der Schlauchnetzenden beim Einschließen der gerafften Schlauchhülle in das Schlauchnetz kann entfallen.

- 2 -

## Beschreibung

Die Erfindung betrifft eine axial geraffte und in ein aufweitbares Schlauchnetz eingeschlossene Schlauchhülle, insbesondere zur späteren Verarbeitung auf Wurstfüllautomaten.

Eine derart verpackte geraffte Schlauchhülle ist beispielsweise aus der DE-OS 25 11 77o und dem DE-Gbm 75 o8 538 bekannt. Das dort verwendete Schlauchnetz besteht aus einer Vielzahl von zur Hälfte in der einen und zur Hälfte in der anderen Steigungsrichtung schraubenförmig gewundenen und zu rhombenförmigen Maschinen miteinander verknüpften dehnungsfesten Fäden, wodurch sich das Schlauchnetz unter axialer Verkürzung aufzuweiten vermag bzw. bei axialer Streckung im Durchmesser verengt. Zur Verpackung der gerafften Schlauchhülle müssen deshalb die Enden des Schlauchnetzes durch Abbinden oder Setzen von Verschlußclips verschlossen werden, und es müssen diese Verschlüsse später bei der Weiterverarbeitung auf der Wurstfüllmaschine wieder entfernt werden, was nicht nur umständlich und zeitraubend ist, sondern die Gefahr mit sich bringt, daß sich die Raffalten nach Entfernung der Verschlüsse unkontrolliert öffnen.

Erfindungsgemäß werden diese Schwierigkeiten in überraschend einfacher Weise dadurch beseitigt, daß das Schlauchnetz in an sich bekannter Weise aus axialen und in Umfangsrichtung verlaufenden Maschenfäden geknüpft ist, von denen die in Umfangsrichtung verlaufenden Maschenfäden aus elastisch dehnbarem Material bestehen, während die axial verlaufenden Maschenfäden dehnungssteif sind.

Derartige Schlauchnetze sind zwar auf dem Fleischverarbeitungsgebiet zur Konfektionierung von Schinken, Rollbraten und dergleichen bereits bekannt. Dort haben sie jedoch nur die Aufgabe, die derart verpackte Fleischware bis zur Verarbeitung in der Küche zusammenzuhalten, und werden dann gänzlich entfernt. Mit ihrer erfindungsgemäßen Verwendung zur Verpackung von axial gerafften Schlauchhüllen wird jedoch über die bloße Verpackungswirkung hinaus ein gesteuertes Abziehen des Hüllenmaterials von der Schlauchraupe Falte für Falte erzielt, und das besondere Abbinden der Schlauchnetzenden kann entfallen.

Vorteilhafte Ausgestaltungen der Erfindung ergeben sich aus den Unteransprüchen.

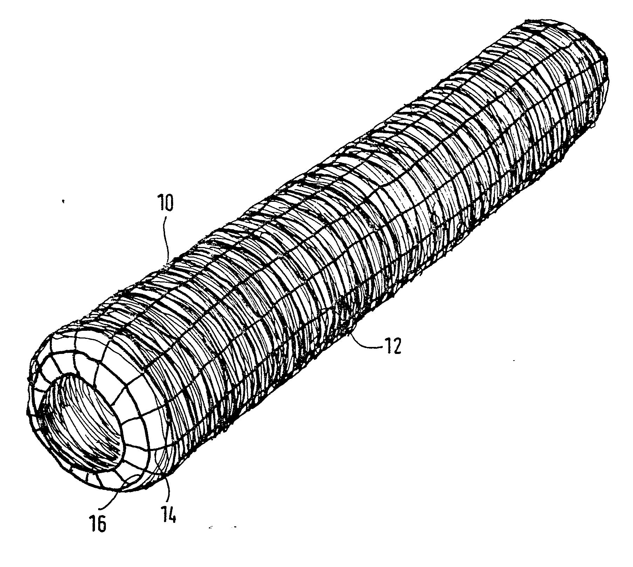

Ein Ausführungsbeispiel der Erfindung ist in der Zeichnung perspektivisch dargestellt. In einem Schlauchnetz 1o ist eine axial geraffte Schlauchhülle 12 in Gestalt einer Raupe von einer Länge von beispielsweise 3o-4o cm eingeschlossen. Das Schlauchnetz besteht aus axialen Maschenfäden 14 und in Umfangsrichtung verlaufenden Maschenfäden 16, die in geeigneter Weise an den Kreuzungsstellen zu Maschen verknüpft sind.

Die in Umfangsrichtung verlaufenden Maschenfäden, die beim dargestellten Ausführungsbeispiel einen einzigen raupenförmigen Fadenstrang bilden, bestehen aus einem axial dehnbaren Material wie beispielsweise umsponnenen Gummi, während die axialen Maschenfäden 14 aus einem dehnungssteifen natürlichen oder künstlichen Werkstoff bestehen.

Das Schlauchnetz 1o hat vor dem Aufziehen auf die Raupe 12 einen wesentlich kleineren Durchmesser als die Raupe 12 und wird beim Aufziehen auf die Raupe 12 elastisch aufgeweitet. Infolgedessen verengt sich das Schlauchnetz 1o von selbst an den Enden der Schlauchhülle 12 und verhindert dort ein Öffnen der Falten.

Demgegenüber ist die Elastizität der in Umfangsrichtung verlaufenden Maschenfäden 16 so groß, daß das Hüllenmaterial bei der Verarbeitung auf einer Wurstfüllmaschine ohne gefährliche Behinderung aus dem Schlauchnetz 1o herausgezogen werden kann.

- 1 -

## Ansprüche

1. Axial geraffte und in ein aufweitbares Schlauchnetz eingeschlossene Schlauchhülle, insbesondere zur
späteren Verarbeitung auf Wurstfüllautomaten, d a -
d u r c h   g e k e n n z e i c h n e t , daß das
Schlauchnetz (1o) in an sich bekannter Weise aus axialen
und in Umfangsrichtung verlaufenden Maschenfäden (14, 16)
geknüpft ist, von denen die in Umfangsrichtung verlaufenden Maschenfäden (16) aus elastisch dehnbarem Material
bestehen, während die axial verlaufenden Maschenfäden (14)
dehnungssteif sind.

2. Schlauchhülle nach Anspruch 1, d a d u r c h   g e k e n n -
z e i c h n e t , daß die in Umfangsrichtung verlaufenden Fäden (16) in sich geschlossene Ringe bilden.

3. Schlauchhülle nach Anspruch 1, d a d u r c h   g e k e n n -
z e i c h n e t , daß die in Umfangsrichtung verlaufenden Fäden (16) einen fortlaufenden schraubenförmigen Strang
bilden.

Europäisches
Patentamt

**EUROPÄISCHER RECHERCHENBERICHT**

0068233
Nummer der Anmeldung

EP 82 10 5124

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| Y | DE-A-2 940 775 (HOECHST) <br> * Seite 18, Zeilen 11-17; Figur 1 * | 1,2 | A 22 C 13/00 |
| | --- | | |
| Y | DE-C-1 174 201 (HÄMMERLE) <br> * Anspruch 1 * | 1,2 | |
| | --- | | |
| A | IT-A- 522 868 (I.S.A.P.) <br> * Insgesamt * | 1 | |
| | --- | | |
| D,A | DE-A-2 511 770 (KOLLROSS) <br> * Anspruch 1; Figur 3 * | 1 | |
| | ----- | | |

RECHERCHIERTE
SACHGEBIETE (Int. Cl. ³)

A 22 C

Der vorliegende Recherchenbericht wurde für alle Patentansprüche erstellt.

| Recherchenort | Abschlußdatum der Recherche | Prüfer |
|---|---|---|
| DEN HAAG | 30-09-1982 | DE LAMEILLIEURE D. |